(19) Europäisches Patentamt / European Patent Office / Office européen des brevets

(11) **EP 3 768 882 B1**

(12) **FASCICULE DE BREVET EUROPEEN**

(45) Date de publication et mention
de la délivrance du brevet:
**22.02.2023 Bulletin 2023/08**

(21) Numéro de dépôt: **19718433.6**

(22) Date de dépôt: **19.03.2019**

(51) Classification Internationale des Brevets (IPC):
**D02G 3/48** *(2006.01)*        **D07B 1/02** *(2006.01)*
**B60C 9/00** *(2006.01)*

(52) Classification Coopérative des Brevets (CPC):
**D02G 3/48; B60C 9/0042; B60C 9/0064;
B60C 9/08; B60C 9/2009; B60C 9/28;**
B60C 2009/0092; B60C 2009/2019;
B60C 2009/2077; B60C 2009/2096;
B60C 2009/2214; B60C 2009/2257;
B60C 2009/2285; D10B 2331/021

(86) Numéro de dépôt international:
**PCT/FR2019/050619**

(87) Numéro de publication internationale:
**WO 2019/180369 (26.09.2019 Gazette 2019/39)**

(54) **CÂBLÉ TEXTILE ARAMIDE PERFECTIONNE À AU MOINS TRIPLE TORSION**

VERBESSERTER ARAMIDTEXTILKORD MIT MINDESTENS EINER DREIFACHEN VERDRILLUNG

IMPROVED ARAMID TEXTILE CORD WITH AN AT LEAST TRIPLE TWIST

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **20.03.2018 FR 1852371**

(43) Date de publication de la demande:
**27.01.2021 Bulletin 2021/04**

(73) Titulaire: **COMPAGNIE GENERALE DES
ETABLISSEMENTS MICHELIN
63000 Clermont-Ferrand (FR)**

(72) Inventeurs:
• **BOSQUET, Augustin**
  **63040 Clermont-Ferrand Cedex 9 (FR)**
• **CORNILLE, Richard**
  **63040 Clermont-Ferrand Cedex 9 (FR)**

(74) Mandataire: **Louret, Sylvain**
  **M.F.P. MICHELIN
  Service juridique - Propriété Intellectuelle
  DCJ/PI - F35 - Site de Ladoux
  23, place des Carmes - Déchaux
  63040 Clermont-Ferrand Cedex 9 (FR)**

(56) Documents cités:
  **EP-A1- 2 186 652        WO-A1-2016/091811
  WO-A1-2016/156263**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention est relative aux éléments de renforcement ou « renforts » textiles utilisables pour le renforcement d'articles tels que des pneumatiques pour véhicules.

Elle se rapporte plus particulièrement à des câblés ou retors textiles utilisables notamment pour le renforcement de tels pneumatiques.

Le textile est utilisé comme renfort depuis les origines du pneu. Les câblés textiles, fabriqués à partir de fibres textiles continues telles que des fibres en polyester, nylon, cellulose ou aramide, jouent on le sait un rôle important dans les pneumatiques, y compris dans les pneumatiques à hautes performances homologués pour rouler à très haute vitesse. Pour répondre aux exigences des pneumatiques, ils doivent présenter une forte résistance à la rupture, un module en extension élevé, une bonne endurance en fatigue et enfin une bonne adhésion aux matrices de caoutchouc ou autres polymères qu'ils sont susceptibles de renforcer.

On rappellera simplement ici que ces retors ou câblés textiles, traditionnellement à double torsion (T1, T2), sont préparés par un procédé dit de retordage (« *twisting* ») dans lequel :

- au cours d'une première étape, chaque filé ou fibre multifilamentaire (en anglais « *yarn* ») constitutive du câblé est tout d'abord individuellement tordue sur elle-même (selon une torsion initiale T1) dans une direction donnée D1 (respectivement sens S ou Z), pour former un brin (en anglais « *strand* ») dans lequel les filaments élémentaires se voient imposés une déformation en hélice autour de l'axe de fibre (ou axe du brin) ;
- puis, au cours d'une seconde étape, plusieurs brins, généralement au nombre de deux, trois ou quatre, de natures identiques ou différentes dans le cas de câblés dits hybrides ou composites, sont ensuite retordus ensemble selon une torsion finale T2 (pouvant être égale à ou différente de T1) en direction opposée D2 (respectivement sens Z ou S, selon une nomenclature reconnue désignant l'orientation des spires selon la barre transversale d'un S ou d'un Z), pour l'obtention du câblé (en anglais « *cord* ») ou assemblage final à plusieurs brins.

Le rôle du retordage est d'adapter les propriétés du matériau afin de créer la cohésion transversale du renfort, d'accroître sa tenue en fatigue et aussi d'améliorer l'adhésion avec la matrice renforcée.

De tels câblés textiles, leurs constructions et procédés de fabrication sont bien connus de l'homme du métier. Ils ont été décrits en détail dans un grand nombre de documents, pour ne citer que quelques exemples dans les documents brevet EP 021 485, EP 220 642, EP 225 391, EP 335 588, EP 467 585, US 3 419 060, US 3 977 172, US 4 155 394, US 5 558, 144, WO97/06294 ou EP 848 767, ou plus récemment WO2012/104279, WO2012/146612, WO 2016/091811 A1 ou WO2014/057082.

Pour pouvoir renforcer des articles en caoutchouc tels que des pneumatiques, la résistance à la fatigue (endurance en extension, flexion, compression) de ces câblés textiles est primordiale. On sait que de manière générale, pour un matériau donné, elle est d'autant plus élevée que les torsions employées sont importantes, mais qu'en contrepartie, leur force à la rupture en extension (appelée ténacité lorsqu'elle est ramenée à l'unité de poids) diminue inexorablement lorsqu'augmente la torsion, ce qui bien entendu est pénalisant du point de vue du renforcement. Une fois fabriqués, les câblés textiles sont noyés dans une matrice polymérique, de préférence une matrice élastomérique, pour former un article ou produit semi-fini comprenant la matrice et les câblés textiles noyés dans la matrice. Afin de fabriquer des pneumatiques, l'article ou produit semi-fini présente une forme générale de nappe.

Aussi, les concepteurs de câblés textiles, comme les fabricants de pneumatiques, sont en permanence à la recherche de câblés textiles dont les propriétés mécaniques, particulièrement force rupture et ténacité, pour un matériau et une torsion donnés, pourraient être améliorées.

Ainsi, on connait de l'état de la technique, notamment du document WO2016/091809 des câblés textiles à triple torsion. Dans WO2016/091809, on décrit un câblé textile correspondant à l'essai n°5 du tableau 1 comportant un assemblage constitué de N=4 brins retordus ensemble selon une torsion T3=300 tours par mètre et une direction S. Chaque brin est constitué de M=3 pré-brins, eux-mêmes tordus ensemble selon une torsion T2=180 ou 240 tours par mètre et une direction Z opposée à S. Chaque pré-brin consiste lui-même en un filé qui a été tordu préalablement sur lui-même selon une torsion T1=60 ou 120 tours par mètre et la direction Z. Chaque filé est constitué de monofilaments élémentaires en polyamide aromatique, en aramide dans WO2016/091809, et présente un titre égal à 55 tex.

Ce câblé a néanmoins l'inconvénient de présenter une déchéance en endurance en flexion-compression perfectible. En outre, ce câblé présente un diamètre qu'il n'est pas souhaitable de voir grossir, un tel grossissement de diamètre conduisant alors inévitablement à épaissir les articles ou produits semi-fini le comprenant, et ce malgré une ténacité apparente du câblé textile satisfaisante.

De plus, la fabrication de ce câblé nécessite des modifications importantes des installations de retordage existantes. En effet, les installations de retordage existantes peuvent facilement retordre 2 ou 3 brins ou pré-brins ensemble alors que le retordage de 4 ou plus brins ou pré-brins nécessite de modifier l'ensemble de l'installation à savoir les moyens d'alimentation ainsi que les moyens de retordage. De telles modifications sont coûteuses et nécessitent de plus l'arrêt des installations existantes.

Enfin, un tel câblé nécessite 12 filés et donc 12 étapes de fabrication de pré-brins. Le procédé est donc soit relativement long, soit nécessite d'utiliser de nombreuses machines de retordage simultanément.

L'invention a pour but un câblé permettant de palier aux inconvénients précités.

Ainsi, l'invention a pour objet un câblé à triple torsion, comportant un assemblage constitué de N=3 brins retordus ensemble selon une torsion T3 et une direction D2, chaque brin étant constitué de M=2 pré-brins, eux-mêmes tordus ensemble selon une torsion T2, et une direction D1 opposée à D2, chaque pré-brin consistant lui-même en un filé qui a été tordu préalablement sur lui-même selon une torsion T1 et la direction D1, dans lequel chaque filé est constitué de monofilaments élémentaires en polyamide aromatique ou en copolyamide aromatique, chaque filé présentant un titre allant de 90 à 130 tex.

Le câblé selon l'invention présente, comme le démontre les essais comparatifs décrits ci-dessous, un diamètre maitrisé tout en maintenant une ténacité apparente satisfaisante, ce qui permet alors, pour des paramètres de calandrage donnés, de fabriquer des articles ou produits semi-fini d'épaisseur raisonnable avec une force à rupture de nappe satisfaisante. Le câblé selon l'invention présente une force à la rupture relativement élevée et une endurance en flexion-compression améliorée. Enfin, sa fabrication, d'une part, ne requiert pas d'apporter de nombreuses modifications aux installations de fabrication existantes et, d'autre part, permet de réduire de façon importante le temps de fabrication et le nombre de machines nécessaires à sa fabrication du fait qu'il est à base de 6 filés et pas 12 comme le câblé de WO2016/091809.

Par monofilament élémentaire en polyamide aromatique ou copolyamide aromatique, on rappelle de manière bien connue qu'il s'agit d'un monofilament élémentaire de macromolécules linéaires formées de groupes aromatiques liés entre eux par des liaisons amides dont au moins 85% sont directement liées à deux noyaux aromatiques, et plus particulièrement de fibres en poly (p-phénylène téréphtalamide) (ou PPTA), fabriquées depuis fort longtemps à partir de compositions de filage optiquement anisotropes. Parmi les polyamides aromatiques ou copolyamides aromatiques, on pourra citer les polyarylamides (ou PAA, notamment connu sous la dénomination commerciale Ixef de la société Solvay), le poly(métaxylylène adipamide), les polyphtalamides (ou PPA, notamment connu sous la dénomination commerciale Amodel de la société Solvay), les polyamides semi-aromatiques amorphes (ou PA 6-3T, notamment connu sous la dénomination commerciale Trogamid de la société Evonik), les para-aramides (ou poly(paraphénylène téréphtalamide ou PA PPD-T notamment connu sous la dénomination commerciale Kevlar de la société Du Pont de Nemours ou Twaron de la société Teijin).

L'invention concerne également l'utilisation d'un tel câblé pour le renforcement d'articles ou produits semi-finis comprenant une matrice polymérique dans laquelle est noyé le câblé.

De tels articles ou produits semi-finis sont des tuyaux, des courroies, des bandes transporteuses, des pneumatiques pour véhicules, tant à l'état cru (c'est-à-dire avant réticulation ou vulcanisation) qu'à l'état cuit (après réticulation ou vulcanisation). De tels articles ou produits semi-finis prennent, dans des modes préférés, la forme d'une nappe. Par nappe, on entend l'assemblage, d'une part, d'un ou de plusieurs câblés et, d'autre part, d'une matrice polymérique, de préférence élastomérique, le ou les câblés étant noyés dans la matrice polymérique, de préférence élastomérique.

Ainsi, l'invention a encore pour autre objet un pneumatique comprenant un câblé tel que défini ci-dessus. Par pneumatique, on entend un bandage destiné à former une cavité en coopérant avec un élément support, par exemple une jante, cette cavité étant apte à être pressurisée à une pression supérieure à la pression atmosphérique. Un pneumatique selon l'invention présente une structure de forme sensiblement toroïdale.

Les pneumatiques de l'invention sont préférentiellement destinés à des véhicules à moteur du type tourisme, 4x4, "SUV" (Sport Utility Vehicles).

Dans la présente demande, sauf indication expresse différente, tous les pourcentages (%) indiqués sont des pourcentages en masse.

Tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Toutes les propriétés (titre, module initial des filés, force à la rupture et ténacité) indiquées précédemment sont déterminées à 20°C sur des câblés écrus (c'est-à-dire non encollés) ou adhérisés (c'est-à-dire prêts à l'emploi ou extraits de l'article qu'ils renforcent) qui ont été soumis à un conditionnement préalable ; par "conditionnement préalable", on entend le stockage des câblés (après séchage) pendant au moins 24 heures, avant mesure, dans une atmosphère standard selon la norme européenne DIN EN 20139 (température de 20 ± 2°C ; hygrométrie de 65 ± 2 %).

Le titre (ou densité linéaire) des filés, pré-brins, brins ou des câblés est déterminé est déterminé selon la norme ASTM D 885/D 885M - 10a de 2014 ; le titre est donné en tex (poids en grammes de 1000 m de produit - rappel: 0, 111 tex égal à 1 denier).

Les propriétés mécaniques en extension (ténacité, module initial, allongement à la rupture) sont mesurées de manière connue à l'aide d'une machine de traction « INSTRON » munie de pinces à embarrage du type « 4D » (pour force rupture inférieure à 100 daN) ou « 4E » (pour force rupture au moins égale à 100 daN), sauf indications différentes selon la norme ASTM D 885/D 885M - 10a de 2014. Les échantillons testés subissent une traction sur une longueur initiale de 400 mm pour les pinces 4D et 800 mm pour les pinces 4E, à une vitesse nominale de 200 mm/min, sous une prétension standard de 0,5 cN/tex. Tous les résultats donnés sont une moyenne de 10 mesures. Lorsque les propriétés sont mesurées sur des filés, ces derniers subissent de manière bien connue une très faible torsion préalable, dite « torsion de protection », correspondant à un angle d'hélice d'environ 6 degrés, avant positionnement et traction dans les pinces.

Comme connu de l'homme du métier, la ténacité est la force à la rupture rapportée au titre, elle est exprimée en cN/tex. La ténacité apparente (en daN/mm$^2$), est la force à la rupture rapportée à la section apparente S, avec S=(Pi* $\varnothing$ $^2$)/4, où $\varnothing$ est le diamètre apparent qui est mesuré selon la méthode qui suit.

On utilise un appareil qui, à l'aide d'un récepteur composé d'un système optique collecteur, d'une photodiode et d'un amplificateur, permet de mesurer l'ombre d'un câblé éclairé par un faisceau LASER de lumière parallèle avec une précision de 0,1 micromètre. Un tel appareil est commercialisé par exemple par la société Z-Mike, sous la référence « 1210 ». La méthode consiste à fixer sur une table mobile motorisée, sous une prétension standard de 0,5 cN/tex, un échantillon du câblé dont on souhaite mesurer le diamètre, ayant subi un conditionnement préalable. Solidaire de la table mobile, le câblé est déplacé perpendiculairement au système de mesure d'ombre portée à une vitesse de 25 mm/s et coupe orthogonalement le faisceau LASER. Au moins 200 mesures d'ombres portées sont effectuées sur une longueur de 420 mm de câblé ; la moyenne de ces mesures d'ombre portée représente le diamètre apparent $\varnothing$.

On calcule la force à rupture d'une nappe à partir d'une courbe force-allongement obtenue en appliquant la norme ASTM D 885/D 885M - 10a de 2014 à un câblé de la nappe. On détermine la force à rupture de la nappe en multipliant la force à rupture du câblé par le nombre de câblés par mm de nappe, ce nombre étant déterminé selon une direction perpendiculaire à la direction selon laquelle les câblés s'étendent dans la nappe.

Par direction axiale, on entend la direction sensiblement parallèle à l'axe de rotation du pneumatique.

Par direction circonférentielle, on entend la direction qui est sensiblement perpendiculaire à la fois à la direction axiale et à un rayon du pneumatique (en d'autres termes, tangente à un cercle dont le centre est sur l'axe de rotation du pneumatique).

Par direction radiale, on entend la direction selon un rayon du pneumatique, c'est-à-dire une direction quelconque intersectant l'axe de rotation du pneumatique et sensiblement perpendiculairement à cet axe.

Par plan médian (noté M), on entend le plan perpendiculaire à l'axe de rotation du pneumatique qui est situé à mi-distance des deux bourrelets et passe par le milieu de l'armature de sommet.

Par plan circonférentiel équatorial (noté E), on entend le plan théorique passant par l'équateur du pneumatique, perpendiculaire au plan médian et à la direction radiale. L'équateur du pneumatique est, dans un plan de coupe circonférentielle (plan perpendiculaire à la direction circonférentielle et parallèle aux directions radiale et axiales) l'axe parallèle à l'axe de rotation du pneumatique et située à équidistance entre le point radialement le plus externe de la bande de roulement destiné à être au contact avec le sol et le point radialement le plus interne du pneumatique destiné à être en contact avec un support, par exemple une jante, la distance entre ces deux points étant égale à H.

Par orientation d'un angle, on entend le sens, horaire ou anti-horaire, dans lequel il faut tourner à partir d'une droite de référence, ici la direction circonférentielle du pneumatique, définissant l'angle pour atteindre l'autre droite définissant l'angle.

## CABLE SELON L'INVENTION

Le câblé ou retors textile de l'invention est donc un câblé de construction très spécifique, qui a pour caractéristiques essentielles de comporter un assemblage:

- présentant une triple (c'est-à-dire trois) torsion T1, T2, T3 ;
- l'assemblage étant constitué de N=3 brins, qui sont retordus ensemble selon une torsion finale T3 et une direction finale D2 (S ou Z) ;
- chaque brin étant constitué de M=2 pré-brins eux-mêmes tordus ensemble selon une torsion intermédiaire T2 et une direction intermédiaire D1 (Z ou S) opposée à D2 (S ou Z) ;
- chaque pré-brin consistant en un filé qui a été tordu préalablement sur lui-même selon une torsion initiale T1 et la direction initiale D1 (Z ou S);
- chaque filé est constitué de monofilaments élémentaires en polyamide aromatique ou en copolyamide aromatique ; et
- chaque filé présente un titre allant de 90 à 130 tex.

Par câblé ou assemblage ayant une triple torsion (c'est-à-dire trois torsions), l'homme du métier comprendra immédiatement que trois opérations consécutives de détorsion (ou torsion en sens inverse) sont donc nécessaires pour « déconstruire » le câblé ou l'assemblage de l'invention et « remonter » aux filés initiaux le constituant, c'est-à-dire retrouver les filés (fibres comprenant les monofilaments élémentaires) de départ dans leur état initial c'est-à-dire dépourvu de torsion. Dit autrement, il y a exactement trois (ni deux, ni quatre) opérations de torsion successives pour constituer le câblé ou l'assemblage de l'invention, et non deux comme c'est le cas habituellement.

Avantageusement, chaque filé présente un titre allant de 100 à 120 tex, de préférence chaque filé présente un titre égal à 110 tex.

De manière bien connue de l'homme du métier, les torsions peuvent être mesurées et exprimées de deux manières différentes, soit et de manière simple en nombre de tours par mètre (t.m$^{-1}$), soit et ce qui est plus rigoureux lorsqu'on souhaite comparer des matériaux de natures (masses volumiques) et/ou de titres différents, en angle d'hélice ou ce qui est équivalent sous forme d'un facteur de torsion K.

Le facteur de torsion K est lié à la torsion T (ici, par exemple, respectivement T1, T2 et T3) selon la relation connue qui suit :

$$K = (Torsion\ T) \times [(Titre\ /\ (1000.\rho)]^{1/2}$$

dans laquelle la torsion T des monofilaments élémentaires (constitutifs du pré-brin, brin ou retors) est exprimée en tours par mètre, le titre est exprimé en tex (poids en gramme de 1000 mètres de pré-brin, brin ou retors), et enfin $\rho$ est la densité ou masse volumique (en g/cm3) du matériau constitutif du pré-brin, brin ou retors (environ 1,50 g/cm3 pour la cellulose, 1,44 g/cm3 pour l'aramide, 1,38 g/cm3 pour un polyester tel que PET, 1,14 g/cm3 pour le nylon) ; dans le cas d'un câblé hybride, $\rho$ est bien entendu une moyenne des densités pondérée par les titres respectifs des matériaux constitutifs des pré-brins, brins ou retors.

Préférentiellement, la torsion T1 exprimée en tours par mètre (t.m$^{-1}$) va de 10 à 350, plus préférentiellement de 20 à 200 et encore plus préférentiellement de 105 à 135. Selon un mode de réalisation préférentiel, chaque pré-brin présente un coefficient de torsion K1 allant de 2 à 80, plus préférentiellement de 6 à 70 et encore plus préférentiellement de 30 à 40.

Selon un mode de réalisation préférentiel, la torsion T2 exprimée en tours par mètre va de préférence de 25 à 470, plus préférentiellement de 35 à 400 et encore plus préférentiellement de 170 à 190. Selon un mode de réalisation préférentiel, chaque brin présente un coefficient de torsion K2 allant de 10 à 150, plus préférentiellement de 20 à 130 et encore plus préférentiellement de 69 à 86.

Selon un mode de réalisation préférentiel, la torsion T3 exprimée en tours par mètre va de préférence de 30 à 600, plus préférentiellement de 80 à 500 et encore plus préférentiellement de 280 à 330. Selon un mode de réalisation préférentiel, le câblé de l'invention présente un coefficient de torsion K3 allant de 50 à 500, plus préférentiellement de 80 à 230.

De préférence, T2 est supérieure à T1 (T1 et T2 étant notamment exprimées en t.m$^{-1}$). Selon un autre mode préférentiel, combiné ou non au précédent, T3 est supérieure à T2 (T2 et T3 étant notamment exprimées en t.m$^{-1}$), T2 allant plus préférentiellement de 0,2 fois T3 à 0,95 fois T3, en particulier de 0,4 fois T3 à 0,8 fois T3.

Selon un mode de réalisation préférentiel permettant d'améliorer encore davantage l'endurance, la somme T1+T2 va de 0,8 fois T3 à 1,2 fois T3, plus préférentiellement de 0,9 fois T3 à 1,1 fois T3 (T1, T2 et T3 étant notamment exprimées en t.m$^{-1}$), T1+T2 étant en particulier préférentiellement égale à T3.

Dans un mode de réalisation, le câblé présente une ténacité apparente élevée, ici supérieure ou égale à 115 daN.mm$^{-2}$, de préférence supérieure ou égale à 130 daN.mm$^{-2}$

De façon très avantageuse, le câblé présente un diamètre relativement faible, ici inférieur ou égal à 1,03 mm, de préférence inférieur ou égal à 1.00 mm et plus préférentiellement inférieur ou égal à 0,98 mm.

## PNEUMATIQUE SELON L'INVENTION

Le câblé selon l'invention est particulièrement avantageux dans certains modes de réalisation du pneumatique selon l'invention du fait de son excellente endurance, de son diamètre maitrisé et de sa facilité de fabrication avec des moyens actuels.

Ainsi, dans un mode de réalisation particulièrement avantageux, le pneumatique comprend une armature de sommet comprenant une armature de frettage comprenant une nappe de frettage comprenant au moins un élément filaire textile de renfort de frettage faisant un angle strictement inférieur à 10° avec la direction circonférentielle du pneumatique, le ou chaque élément filaire textile de renfort de frettage étant formé par un câblé tel que décrit ci-dessus.

Ainsi, grâce à son diamètre maitrisé, le câblé permet de contrôler les épaisseurs de la nappe de frettage, la masse de celle-ci, l'hystérèse du pneumatique et donc la résistance au roulement du pneumatique. En effet, toute chose étant égale par ailleurs, plus l'épaisseur de la nappe de frettage est importante, plus l'hystérèse de celle-ci est élevée. En maitrisant le diamètre, on évite d'augmenter l'épaisseur totale de la nappe tout en maintenant l'épaisseur présente au dos de chaque câblé ce qui permet de maintenir les épaisseurs de découplage entre, d'une part, la bande de roulement et la nappe de frettage, et d'autre part, les nappes radialement intérieures à la nappe de frettage et la nappe de frettage.

En outre, en maintenant l'épaisseur au dos de chaque câblé constante, on conserve la résistance au passage des agents corrosifs au travers de la nappe de frettage ce qui permet de protéger l'armature de travail, protection d'autant plus intéressante lorsque l'armature de travail ne comprend qu'une unique nappe de travail.

Avantageusement, l'armature de frettage comprend une unique nappe de frettage. Ainsi, l'armature de frettage est, à l'exception de la nappe de frettage, dépourvue de toute nappe renforcée par des éléments de renfort filaires. Les éléments de renfort filaires de telles nappes renforcées exclues de l'armature de frettage du pneumatique comprennent les éléments de renfort filaires métalliques et les éléments de renfort filaires textiles. De façon très préférentielle, l'armature de frettage est constituée par une nappe de frettage.

Dans des modes de réalisation préférés, le ou chaque élément filaire textile de renfort de frettage fait un angle inférieur ou égal à 7°, et plus préférentiellement inférieur ou égal 5° avec la direction circonférentielle du pneumatique.

Avantageusement, le pneumatique comprend un sommet comprenant une bande de roulement, deux flancs, deux bourrelets, chaque flanc reliant chaque bourrelet au sommet, l'armature de sommet s'étendant dans le sommet selon une direction circonférentielle du pneumatique.

Avantageusement, le pneumatique comprend une armature de carcasse ancrée dans chacun des bourrelets et s'étendant dans les flancs et dans le sommet, l'armature de sommet étant radialement intercalée entre l'armature de carcasse et la bande de roulement.

Dans un mode de réalisation, l'armature de carcasse comprend une unique nappe de carcasse. Ainsi, l'armature de carcasse est, à l'exception de la nappe de carcasse, dépourvue de toute nappe renforcée par des éléments de renfort filaires. Les éléments de renfort filaires de telles nappes renforcées exclues de l'armature de carcasse du pneumatique comprennent les éléments de renfort filaires métalliques et les éléments de renfort filaires textiles. De façon très préférentielle, l'armature de carcasse est constituée par une nappe de carcasse..

De façon préférée, l'unique nappe de carcasse comprend des éléments filaires de renfort de carcasse. Avantageusement, les éléments filaires de renfort de carcasse sont ancrés dans chaque bourrelet et s'étendent d'un bourrelet à l'autre du pneumatique en passant dans chaque flanc et le sommet.

Dans un mode de réalisation, chaque élément filaire de renfort de carcasse fait un angle $AC_1$ supérieur ou égal à 55°, de préférence allant de 55° à 80° et plus préférentiellement de 60° à 70°, avec la direction circonférentielle du pneumatique dans le plan médian du pneumatique. Ainsi, les éléments filaires de renfort de carcasse, de par l'angle formé avec la direction circonférentielle, participe à la formation d'un maillage triangulaire dans le sommet du pneumatique.

Dans un mode de réalisation, chaque élément filaire de renfort de carcasse faisant un angle $A_{C2}$ supérieur ou égal à 85° avec la direction circonférentielle du pneumatique dans le plan circonférentiel équatorial du pneumatique. Les éléments filaires de renfort de carcasse sont sensiblement radiaux dans chaque flanc, c'est-à-dire sensiblement perpendiculaires à la direction circonférentielle, ce qui permet de conserver tous les avantages d'un pneumatique à carcasse radiale.

Dans un mode de réalisation particulièrement avantageux, l'armature de sommet comprend une armature de travail comprenant une unique nappe de travail. Ainsi, l'armature de travail est, à l'exception de la nappe de travail, dépourvue de toute nappe renforcée par des éléments de renfort filaires. Les éléments de renfort filaires de telles nappes renforcées exclues de l'armature de travail du pneumatique comprennent les éléments de renfort filaires métalliques et les éléments de renfort filaires textiles. De façon très préférentielle, l'armature de travail est constituée par une nappe de travail. Les propriétés d'endurance de l'armature de frettage conférées par le câblé selon l'invention permettent de supprimer avantageusement une nappe de travail de l'armature de travail par rapport à un pneumatique classique dans lequel l'armature de travail comprend deux nappes de travail. On obtient un pneumatique significativement allégé.

Dans un autre mode de réalisation, l'armature de sommet comprend une armature de travail comprenant deux nappes de travail. Les propriétés d'endurance de l'armature de frettage conférées par le câblé selon l'invention permettent d'obtenir une armature de sommet très endurante. On obtient un pneumatique significativement plus endurant.

Dans les modes de réalisation décrits, le sommet comprend la bande de roulement et l'armature de sommet. On entend par bande de roulement une bande de matériau polymérique, de préférence élastomérique, délimitée :

- radialement vers l'extérieur, par une surface destinée à être au contact d'un sol et
- radialement vers l'intérieur, par l'armature de sommet.

La bande de matériau polymérique est constituée d'une nappe d'un matériau polymérique, de préférence élastomérique ou bien constituée d'un empilement de plusieurs nappes, chaque nappe étant constituée d'un matériau polymérique, de préférence élastomérique.

L'armature de sommet comprend une unique armature de frettage et une unique armature de travail. Ainsi, l'armature de sommet est, à l'exception de l'armature de frettage et de l'armature de travail, dépourvue de toute armature renforcée par des éléments de renfort. Les éléments de renfort de telles armatures exclues de l'armature de sommet du pneumatique comprennent les éléments de renfort filaires métalliques et les éléments de renfort filaires textiles. De façon très préférentielle, l'armature de sommet est constituée de l'armature de frettage et de l'armature de travail.

Dans un mode de réalisation très préférentiel, le sommet est, à l'exception, de l'armature de sommet, dépourvue de toute armature renforcée par des éléments de renfort. Les éléments de renfort de telles armatures exclues du sommet du pneumatique comprennent les éléments de renfort filaires métalliques et les éléments de renfort filaires textiles. De façon très préférentielle, le sommet est constitué par la bande de roulement et l'armature de sommet.

Dans un mode de réalisation très préférentiel, l'armature de carcasse est agencée directement radialement au contact de l'armature de sommet et l'armature de sommet est agencée directement radialement au contact de la bande de roulement. Dans ce mode de réalisation très préférentiel, l'unique nappe de frettage et l'unique nappe de travail sont avantageusement agencées directement radialement au contact l'une de l'autre.

Par directement radialement au contact, on comprend que les objets considérés directement radialement au contact l'un de l'autre, ici les nappes, armatures ou la bande de roulement, ne sont séparés radialement par aucun objet, par exemple par aucune nappe, armature ni bande qui serait interposé radialement entre les objets considérés directement radialement au contact l'un de l'autre.

Dans un mode de réalisation, l'armature de frettage est radialement intercalée entre l'armature de travail et la bande de roulement.

De façon préférée, l'unique nappe de travail comprend des éléments filaires de renfort de travail.

Avantageusement, l'unique nappe de travail étant délimitée axialement par deux bords axiaux, chaque bord axial étant agencé radialement à l'extérieur de chaque flanc, les éléments filaires de renfort de travail s'étendent d'un bord axial à l'autre bord axial de l'unique nappe de travail.

Dans un mode de réalisation, chaque élément filaire de renfort de travail fait un angle $A_T$ supérieur ou égal à 10°, de préférence allant de 30° à 50° et plus préférentiellement de 35° à 45° avec la direction circonférentielle du pneumatique dans le plan médian du pneumatique. Ainsi, les éléments filaires de renfort de travail, de par l'angle formé avec la direction circonférentielle, participent à la formation d'un maillage triangulaire dans le sommet du pneumatique.

Avantageusement, le ou les éléments filaires textiles de renfort de frettage, les éléments filaires de renfort de travail et les éléments filaires de renfort de carcasse sont agencés de façon à définir, en projection sur le plan circonférentiel équatorial, un maillage triangulaire. Un tel maillage permet d'obtenir un comportement mécanique similaire à celui d'un pneumatique classique de l'état de la technique comprenant une nappe de frettage, deux nappes de travail et une nappe de carcasse.

Afin de former un maillage triangulaire le plus efficace possible, l'orientation de l'angle $A_T$ et l'orientation de l'angle $A_{C1}$ sont préférentiellement opposées par rapport à la direction circonférentielle du pneumatique.

Avantageusement, les éléments filaires de renfort de chaque nappe sont noyés dans une matrice élastomérique. Les différentes nappes peuvent comprendre la même matrice élastomérique ou bien des matrices élastomériques distinctes.

Par matrice élastomérique, on entend une matrice présentant, à l'état réticulé, un comportement élastomérique. Une telle matrice est avantageusement obtenue par réticulation d'une composition comprenant au moins un élastomère et au moins un autre composant. De préférence, la composition comprenant au moins un élastomère et au moins un autre composant comprend un élastomère, un système de réticulation et une charge. Les compositions utilisées pour ces nappes sont des compositions conventionnelles pour calandrage de renforts, typiquement à base de caoutchouc naturel ou autre élastomère diénique, d'une charge renforçante telle que du noir de carbone, d'un système de vulcanisation et des additifs usuels. L'adhésion entre le câblé de l'invention et la matrice dans laquelle il est noyé est assurée par exemple par une composition adhésive usuelle, par exemple une colle du type RFL ou colle équivalente.

Avantageusement, chaque élément filaire de renfort de travail est métallique. Par élément filaire métallique, on entend par définition un élément filaire formé d'un ou d'un assemblage de plusieurs fils constitués intégralement (pour 100% des fils) d'un matériau métallique. Un tel élément filaire métallique est préférentiellement mis en oeuvre avec un ou des fils en acier, plus préférentiellement en acier perlitique (ou ferrito-perlitique) au carbone désigné ci-après par "acier au carbone", ou encore en acier inoxydable (par définition, acier comportant au moins 11% de chrome et au moins 50% de fer). Mais il est bien entendu possible d'utiliser d'autres aciers ou d'autres alliages. Lorsqu'un acier au carbone est avantageusement utilisé, sa teneur en carbone (% en poids d'acier) va de préférence de 0,2% à 1,2%, notamment de 0,5% à 1,1% ; ces teneurs représentent un bon compromis entre les propriétés mécaniques requises pour le pneumatique et la faisabilité des fils. Le métal ou l'acier utilisé, qu'il s'agisse en particulier d'un acier au carbone ou d'un acier inoxydable, peut être lui-même revêtu d'une couche métallique améliorant par exemple les propriétés de mise en oeuvre du câble métallique et/ou de ses éléments constitutifs, ou les propriétés d'usage du câble et/ou du pneumatique eux-mêmes, telles que les propriétés d'adhésion, de résistance à la corrosion ou encore de résistance au vieillissement. Selon un mode de réalisation préférentiel, l'acier utilisé est recouvert d'une couche de laiton (alliage Zn-Cu) ou de zinc.

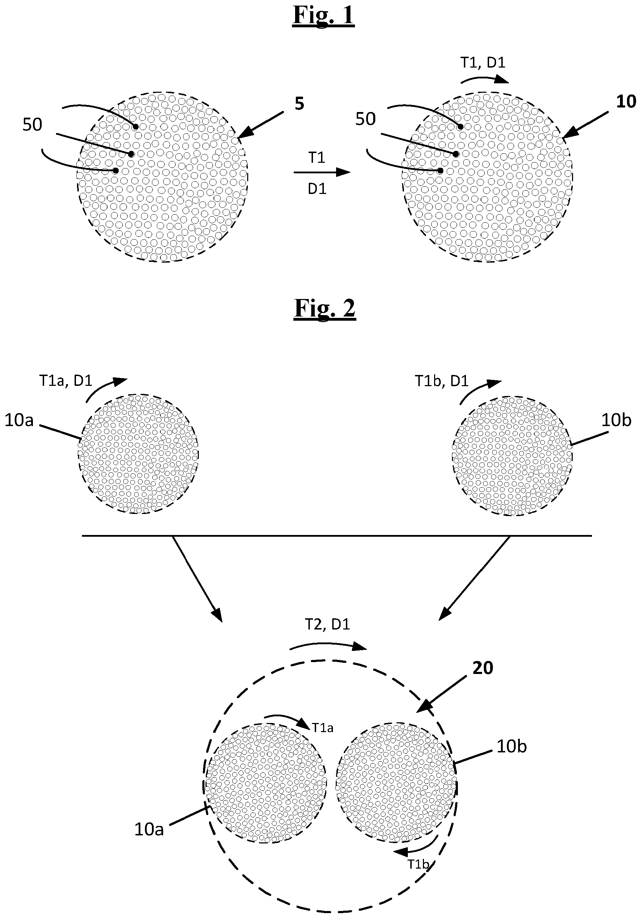

L'invention ainsi que ses avantages seront aisément compris à la lumière de la description détaillée et des exemples de réalisation non limitatifs qui suivent, ainsi que des figures 1 à 6 relatives à ces exemples qui schématisent (sauf indication contraire, sans respect d'une échelle spécifique) :

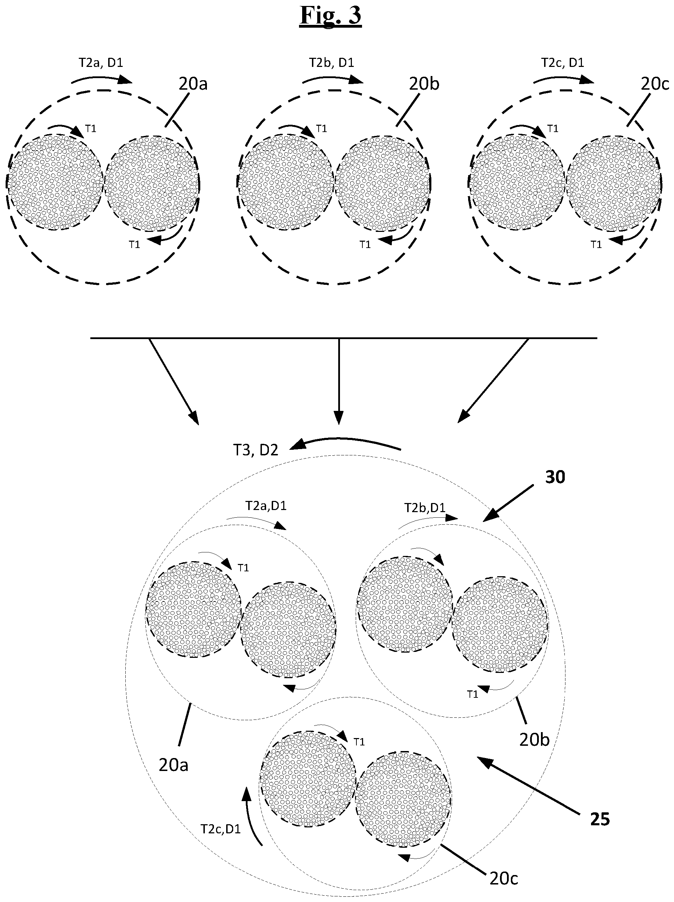

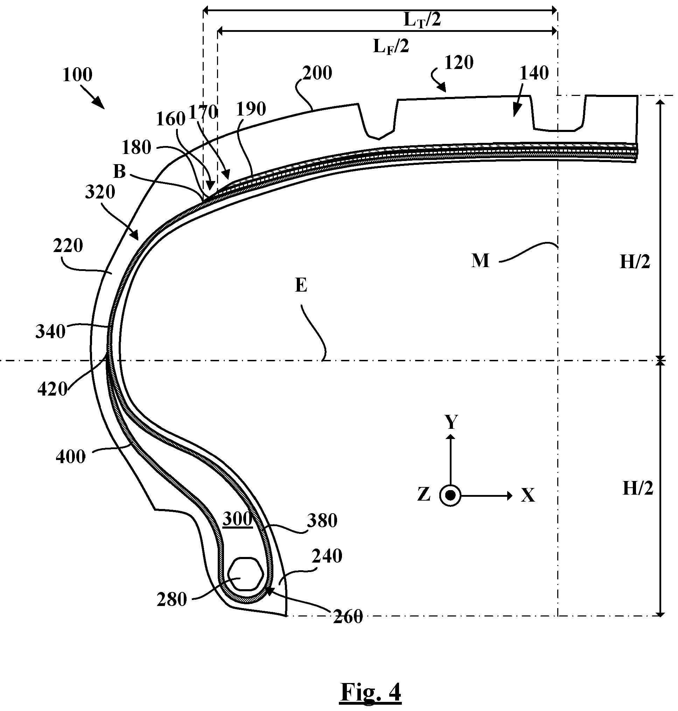

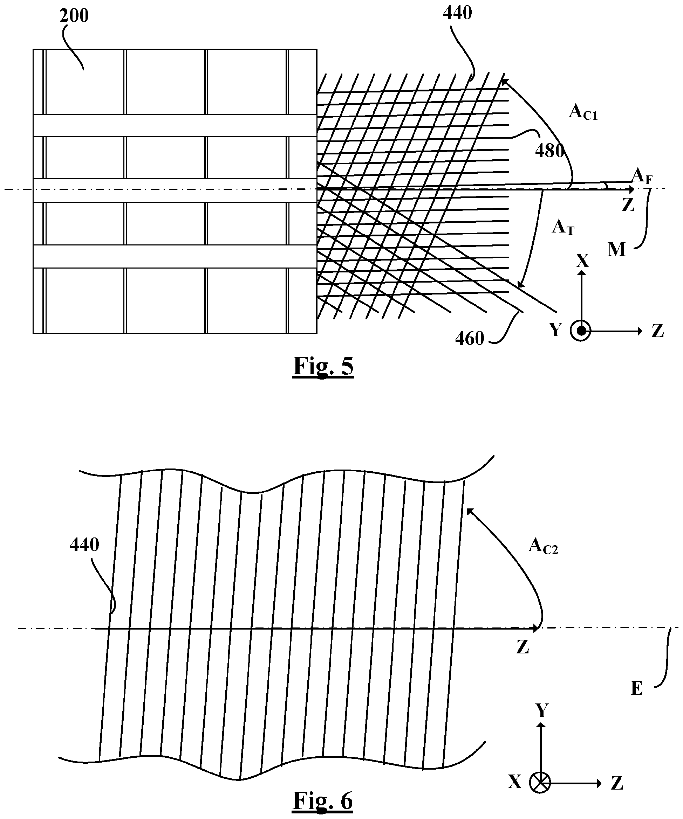

- en coupe transversale, une fibre textile multifilamentaire conventionnelle (ou filé), tout d'abord à l'état initial (5) c'est-à-dire dépourvu de torsion, puis après une première opération de torsion T1 dans la direction D1, pour formation d'un filé tordu sur lui-même ou « pré-brin » (10) (Fig. 1) ;
- en coupe transversale, l'assemblage de 2 filés (10a, 10b) tels que ci-dessus remplissant la fonction de pré-brins (tordus préalablement selon T1a, T1b dans la même direction D1) qui sont assemblés par une deuxième opération de torsion T2 toujours dans la même direction D1, pour formation d'un brin (20) destiné au câblé selon l'invention (Fig. 2) ;
- en coupe transversale, l'assemblage (25) de 3 brins (20a, 20b, 20c) tels que ci-dessus (tordus préalablement selon T2a, T2b, T2c dans la même direction D1) qui sont assemblés par une troisième opération de torsion T3 cette fois dans la direction D2 opposée à la direction D1, pour formation d'un câblé (30) à triple torsion (T1, T2, T3) conforme à l'invention (Fig. 3) ;
- une vue en coupe perpendiculaire à la direction circonférentielle d'un pneumatique selon l'invention (Fig. 4) ;
- une vue en arraché du pneumatique de la figure 4 illustrant la projection sur le plan circonférentiel équatorial E des éléments de filaire de renfort de frettage, des éléments filaires de renfort de travail et des éléments filaires de renfort de carcasse (Fig. 5) ;
- une vue des éléments filaires de renfort de carcasse agencés dans le flanc du pneumatique de la figure 4 en projection sur le plan médian M du pneumatique (Fig. 6).

Tout d'abord, la figure 1 schématise, en coupe transversale, une fibre textile multifilamentaire conventionnelle 5, encore appelé « filé » (en anglais « *yarn* »), à l'état initial c'est-à-dire dépourvu de torsion ; de manière bien connue, un tel filé est formé d'une pluralité de monofilaments élémentaires 50, typiquement plusieurs dizaines à plusieurs centaines, de diamètre très fin généralement inférieur à 25 $\mu$m. Ici, chaque filé 5 est constitué de monofilaments élémentaires en polyamide aromatique ou en copolyamide aromatique et présente un titre allant de 90 à 130 tex, de préférence de 100 à 120 tex et plus préférentiellement égal à 110 tex.

Durant une première opération de torsion T1 (première torsion) exprimée en tours par mètre allant de 10 à 350 tours.m$^{-1}$, de préférence de 20 à 200 tours.m$^{-1}$ et plus préférentiellement de 105 à 135 tours.m$^{-1}$, et ici égale à 120 tours.m$^{-1}$ dans une direction D1 (ici Z), le filé initial 5 est transformé en un filé tordu sur lui-même appelé « pré-brin » 10. Dans ce pré-brin 10, les monofilaments élémentaires 50 se voient ainsi imposés une déformation en hélice autour de l'axe de fibre (ou axe du pré-brin).

Comme illustré à la figure 2, chacun des M=2 pré-brins 10a, 10b est caractérisé par une première torsion T1 spécifique (par exemple ici, T1a, T1b,) qui peut être égale (dans le cas général, c'est-à-dire qu'ici on a par exemple T1a = T1b) ou différente d'un brin à l'autre. Ici, chacun des M=2 pré-brins 10a, 10b présente un coefficient de torsion K1 allant de 2 à 80, de préférence de 6 à 70 et plus préférentiellement de 30 à 40 et ici égal à 33.

Puis, toujours en référence à la figure 2, les M=2 pré-brins 10a, 10b sont ensuite eux-mêmes tordus ensemble, dans la même direction D1 (ici Z) que précédemment, selon une torsion intermédiaire T2 (deuxième torsion) allant de 25 à 470 tours.m$^{-1}$, de préférence de 35 à 400 tours.m$^{-1}$, plus préférentiellement de 170 à 190 tours.m$^{-1}$ et ici égale à 180 tours.m$^{-1}$ pour formation d'un « brin » 20.

Comme illustré à la figure 3, chacun des N=3 brins 20a, 20b, 20c est caractérisé par une deuxième torsion T2 spécifique (par exemple ici, T2a, T2b, T2c) qui peut être égale (dans le cas général, c'est-à-dire qu'ici on a par exemple T2a = T2b = T2c) ou différente d'un brin à l'autre. Ici, chacun des N=3 brins 20a, 20b, 20c présente un coefficient de torsion K2 allant de 10 à 150, de préférence de 20 à 130 et plus préférentiellement de 69 à 86 et ici égal à 70. On notera que T2=180 tours.m$^{-1}$ est supérieure à T1=120 tours.m$^{-1}$.

Enfin, toujours en référence à la figure 3, N=3 brins 20a, 20b, 20c sont ensuite eux-mêmes tordus ensemble, dans la direction D2 opposée à D1 (ici S), selon une torsion finale T3 (troisième torsion) allant de 30 à 600 tours.m$^{-1}$, de préférence de 80 à 500 tours.m$^{-1}$ et plus préférentiellement de 310 à 370 tours.m$^{-1}$ et ici égale à 300 tours.m$^{-1}$ pour formation de l'assemblage 25 du câblé 30 conforme à l'invention. Le câblé 30 présente alors coefficient de torsion K3 allant de 50 à 500, de préférence de 80 à 230 et ici égal à 203.

On notera que T3=300 tours.m$^{-1}$ est supérieure à T2=180 tours.m$^{-1}$. En outre, T2 va de 0,2 fois T3 à 0,95 fois T3, de préférence de 0,4 fois T3 à 0,8 fois T3. Ici, T2=0,60 fois T3.
De plus, la somme T1 +T2 est comprise va de 0,8 fois T3 à 1,2 fois T3, de préférence de 0,9 fois T3 à 1,1 fois T3 et ici T1 +T2=T3.

Dans un premier mode de réalisation, le câblé 30 est formé par l'assemblage 25 écru. On parle alors de câblé écru. Un câblé écru est tel que les monofilaments élémentaires constituants le câblé sont issus du procédé de fabrication du câblé sans qu'aucun revêtement ayant une fonction d'adhésion ne vienne recouvrir monofilaments élémentaires. Ainsi, un câblé écru peut être nu, c'est-à-dire que le ou les matériaux constituants le câblé ne sont revêtus d'aucun revêtement, ou bien peut être ensimé, c'est-à-dire revêtu d'une composition d'ensimage ayant notamment pour fonctions de faciliter le glissement du ou des matériaux constituants le câblé lors de son procédé de fabrication et d'éviter l'accumulation des charges électrostatiques.

Dans un deuxième mode de réalisation, le câblé 30 comprend l'assemblage 25 et une couche externe d'une composition adhésive. On parle alors de câblé adhérisé. Ainsi, après fabrication de l'assemblage 25 écru, on revêt l'assemblage 25 écru d'une couche externe d'une composition adhésive thermoréticulable et on traite thermiquement l'assemblage 25 écru revêtu de la couche externe de façon à réticuler la composition adhésive pour obtenir l'assemblage 25 adhérisé qui forme alors le câblé 30.

Dans un troisième mode de réalisation, le câblé 30 comprend l'assemblage 25 et deux couches de compositions adhésives. Ainsi, après fabrication de l'assemblage 25 écru, on revêt l'assemblage 25 écru d'une couche intermédiaire d'une première composition adhésive thermoréticulable, on traite thermiquement l'assemblage 25 écru revêtu de la couche intermédiaire de façon à réticuler la première composition adhésive pour obtenir un assemblage 25 pré-adhérisé. Puis, on revêt l'assemblage 25 pré-adhérisé d'une couche externe d'une deuxième composition adhésive thermoréticulable et on traite thermiquement l'assemblage 25 pré-adhérisé revêtu de la couche externe de façon à réticuler la deuxième composition adhésive pour obtenir l'assemblage 25 adhérisé qui forme alors le câblé 30.

Le câblé 30 présente une ténacité apparente supérieure ou égale à 115 daN.mm$^{-2}$, de préférence supérieure ou égale à 130 daN.mm$^{-2}$ et ici égale à 135 daN.mm$^{-2}$. Le câblé 30 présente un diamètre inférieur ou égal à 1,03 mm, de préférence inférieur ou égal à 1,00 mm et plus préférentiellement inférieur ou égal à 0,98 mm et ici égal à 0,97 mm.

Dans les figures 4 à 6, on a représenté un repère X, Y, Z correspondant aux directions habituelles respectivement axiale (X), radiale (Y) et circonférentielle (Z) d'un pneumatique.

On a représenté sur la figure 4 un pneumatique, conforme à l'invention et désigné par la référence générale 100. Le pneumatique 100 est sensiblement de révolution autour d'un axe sensiblement parallèle à la direction axiale X. Le pneumatique 100 est ici destiné à un véhicule de tourisme.

Le pneumatique 100 comporte un sommet 120 comprenant une bande de roulement 200 et une armature de sommet 140 s'étendant dans le sommet 120 selon la direction circonférentielle Z.

L'armature de sommet 140 comprend une armature de travail 160 comprenant une unique nappe de travail 180 et une armature de frettage 170 comprenant une unique nappe de frettage 190. Ici, l'armature de travail 160 est constituée de la nappe de travail 180 et l'armature de frettage 170 est constituée de la nappe de frettage 190.

L'armature de sommet 140 est surmontée de la bande de roulement 200. Ici, l'armature de frettage 170, ici la nappe de frettage 190, est radialement intercalée entre l'armature de travail 160 et la bande de roulement 200.

Le pneumatique 100 comprend deux flancs 220 prolongeant le sommet 120 radialement vers l'intérieur. Le pneumatique 100 comporte en outre deux bourrelets 240 radialement intérieurs aux flancs 220 et comportant chacun une structure annulaire de renfort 260, en l'occurrence une tringle 280, surmontée d'un masse de gomme 300 de bourrage, ainsi qu'une armature de carcasse radiale 320. L'armature de sommet 140 est située radialement entre l'armature de carcasse 320 et la bande de roulement 200. Chaque flanc 220 relie chaque bourrelet 240 au sommet 120.

L'armature de carcasse 320 comporte une unique nappe de carcasse 340. L'armature de carcasse 320 est ancrée dans chacun des bourrelets 240 par un retournement autour de la tringle 280 de manière à former dans chaque bourrelet 240 un brin aller 380 s'étendant depuis les bourrelets 240 dans les flancs 220 et dans le sommet 120, et un brin retour 400, l'extrémité radialement extérieure 420 du brin retour 400 étant radialement à l'extérieur de la structure annulaire de renfort 260. L'armature de carcasse 320 s'étend ainsi depuis les bourrelets 240 à travers les flancs 220 jusque dans le sommet 120. Dans ce mode de réalisation, l'armature de carcasse 320 s'étend également axialement au travers du sommet 120. L'armature de sommet 140 est radialement intercalée entre l'armature de carcasse 320 et la bande de roulement 200.

Chaque nappe de travail 180, de frettage 190 et de carcasse 340 comprend une matrice élastomérique dans laquelle sont noyés un ou des éléments de renfort de la nappe correspondante.

En référence à la figure 5, l'unique nappe de carcasse 340 comprend des éléments filaires de renfort de carcasse 440 ancrés dans chaque bourrelet 240 et s'étendent d'un bourrelet à l'autre du pneumatique 100 en passant dans chaque flanc 220 et le sommet 120. Chaque élément filaire de renfort de carcasse 440 fait un angle $A_{C1}$ supérieur ou égal à 55°, de préférence allant de 55° à 80° et plus préférentiellement de 60° à 70°, avec la direction circonférentielle Z du pneumatique 100 dans le plan médian M du pneumatique 100, autrement dit dans le sommet 120.

En référence à la figure 6 qui est une vue simplifiée où, compte tenu de l'échelle, tous les éléments filaires de renfort de carcasse 440 sont représentés parallèles les uns aux autres, chaque élément filaire de renfort de carcasse 440 fait un angle $A_{C2}$ supérieur ou égal à 85° avec la direction circonférentielle Z du pneumatique 100 dans le plan circonférentiel équatorial E du pneumatique 100, autrement dit dans chaque flanc 220.

Dans cet exemple, on prend comme convention qu'un angle orienté dans le sens anti-horaire à partir de la droite de référence, ici la direction circonférentielle Z, est de signe positif et qu'un angle orienté dans le sens horaire à partir de la droite de référence, ici la direction circonférentielle Z, est de signe négatif. En l'espèce, $A_{C1}$=+67° et $A_{C2}$=+90°.

En référence à la figure 5, l'unique nappe de travail 180 comprend des éléments filaires de renfort de travail 460. L'unique nappe de travail étant délimitée axialement par deux bords axiaux B définissant axialement la largeur $L_T$ de la nappe de travail 180, chaque bord axial B est agencé radialement à l'extérieur de chaque flanc 220. Les éléments filaires de renfort de travail 460 s'étendent d'un bord axial B à l'autre bord axial B de l'unique nappe de travail 180.

Chaque élément filaire de renfort de travail 460 fait un angle $A_T$ supérieur ou égal à 10°, de préférence allant de 30° à 50° et plus préférentiellement de 35° à 45° avec la direction circonférentielle Z du pneumatique 100 dans le plan médian M. Compte tenu de l'orientation définie précédemment, $A_T$=-40°.

L'unique nappe de frettage 190 comprend au moins un élément filaire textile de renfort de frettage 480. En l'espèce, la nappe de frettage 190 comprend un unique élément filaire textile de renfort de frettage 480 enroulé continûment sur une largeur axiale $L_F$ du sommet 120 du pneumatique 100. Avantageusement, la largeur axiale $L_F$ est inférieure à la largeur $L_T$ de la nappe de travail 180. L'élément filaire textile de renfort de frettage 480 fait un angle $A_F$ strictement inférieur à 10° avec la direction circonférentielle Z du pneumatique 100, de préférence inférieur ou égal à 7°, et plus préférentiellement inférieur ou égal à 5°. En l'espèce, $A_F$=+5°.

On notera que les éléments filaires de renfort de carcasse 440, de travail 460 et de frettage 480 sont agencés, dans le sommet 120, de façon à définir, en projection sur le plan circonférentiel équatorial E, un maillage triangulaire. Ici, l'angle $A_F$ et le fait que l'orientation de l'angle $A_T$ et l'orientation de l'angle $A_{C1}$ soient opposées par rapport à la direction circonférentielle Z du pneumatique 100, permettent d'obtenir ce maillage triangulaire.

Chaque élément filaire de renfort de carcasse 440 comprend classiquement deux brins multifilamentaires, chaque brin multifilamentaire étant constitué d'un filé de monofilaments de polyesters, ici de PET, ces deux brins multifilamentaires étant surtordus individuellement à 240 tours.m-1 dans un sens puis retordus ensemble à 240 tours.m-1 dans le sens opposé. Ces deux brins multifilamentaires sont enroulés en hélice l'un autour de l'autre. Chacun de ces brins multifilamentaires présente un titre égal à 220 tex.

Chaque élément filaire de renfort de travail 460 est un assemblage de deux monofilaments en acier présentant chacun un diamètre égal à 0,30 mm, les deux monofilaments en acier étant enroulés l'un avec l'autre au pas de 14 mm.

L'élément filaire textile de renfort de frettage 480 est formé par le câblé 30 selon l'invention décrit précédemment.

On fabrique le pneumatique 100 selon le procédé décrit ci-dessous.

Tout d'abord, on fabrique la nappe de travail 180 et la nappe de carcasse 340 en agençant parallèlement les uns aux autres les éléments filaires de renfort de chaque nappe et en les noyant, par exemple par calandrage, dans une composition non réticulée comprenant au moins un élastomère, la composition étant destinée à former une matrice élastomérique une fois réticulée. On obtient une nappe dite droite, dans laquelle les éléments filaires de renfort de la nappe sont parallèles les uns aux autres et sont parallèles à la direction principale de la nappe. Puis, si nécessaire, on découpe des portions de chaque nappe droite selon un angle de découpe et on aboute ces portions les unes aux autres de façon à obtenir une nappe dite à angle, dans laquelle les éléments filaires de renfort de la nappe sont parallèles les uns aux autres et forment un angle avec la direction principale de la nappe égal à l'angle de découpe.

Puis, on met en oeuvre un procédé d'assemblage tel que décrit dans EP1623819 ou bien dans FR1413102.

Lors de ce procédé d'assemblage, on agence l'armature de frettage 170, ici la nappe de frettage 190, radialement à l'extérieur de l'armature de travail 160. En l'espèce, dans une première variante, on fabrique une bandelette de largeur B significativement inférieure à $L_F$, dans laquelle l'élément filaire textile de renfort de frettage 480 formé par le câblé 30 selon l'invention est noyé dans une composition non réticulée et on enroule hélicoïdalement la bandelette sur plusieurs tours de façon à obtenir la largeur axiale $L_F$. Dans une deuxième variante, on fabrique la nappe de frettage 190 présentant une largeur $L_F$ d'une façon analogue aux nappes de carcasse et de travail et on enroule sur un tour la nappe de frettage 190 sur l'armature de travail 160. Dans une troisième variante, on enroule l'élément filaire textile de renfort de frettage 480 formé par le câblé 30 selon l'invention radialement à l'extérieur de la nappe de travail 180, puis on dépose dessus une couche d'une composition dans laquelle sera noyé l'élément filaire textile de renfort de frettage 480 formé par le câblé 30 selon l'invention lors de la cuisson du pneumatique. Dans les trois variantes, on noie l'élément filaire textile de renfort adhérisé 480 formé par le câblé 30 selon l'invention dans une composition pour former, à l'issue du procédé de fabrication du pneumatique, la nappe de frettage 190 comprenant l'élément filaire textile de renfort de frettage 480 formé par le câblé 30 selon l'invention.

Après une étape de pose de la bande de roulement 200, on obtient alors le pneumatique dans lequel les compositions des matrices élastomériques ne sont pas encore réticulées et sont dans un état cru. On parle alors d'une ébauche crue du pneumatique.

Enfin, on réticule les compositions, par exemple par cuisson ou vulcanisation, afin d'obtenir le pneumatique dans lequel les compositions présentent un état réticulé. Lors de cette étape de cuisson, on expanse radialement, circonférentiellement et axialement le pneumatique dont les matrices élastomériques sont à l'état cru, par exemple par mise sous pression d'une membrane de gonflage, de façon à plaquer le pneumatique contre des surfaces d'un moule de cuisson.

## ESSAIS COMPARATIFS

Grâce à sa construction spécifique, le câblé de l'invention présente des propriétés en traction notablement améliorées, comme le démontrent les exemples de réalisation qui suivent.

On a comparé cinq câblés à triple torsion de constructions différentes, non conformes à l'invention (câblés E1, E2, E3 et E4) et conforme à l'invention (câblé 30).

La construction de chaque câblé ainsi que ses propriétés finales sont résumés dans le tableau 1 ci-dessous.

Les filés de départ sont bien entendu disponibles commercialement, ici vendu par la société DuPont sous la dénomination « Kevlar » ou par la société Teijin sous la dénomination « Twaron ».

Pour chaque câblé, on a mesuré la force rupture (Fr) et le diamètre apparent (∅). On en a déduit la ténacité apparente (σ). On a également indiqué les valeurs en base 100 par rapport au câblé E1 de la force à rupture et de la ténacité apparente.

On a également indiqué la densité de câblés et le pas de pose nécessaire à l'obtention d'une nappe dont le coefficient de calandrabilité varie de 4,8 à 4,9, ces deux valeurs étant non significativement différentes et correspondant à une nappe fabricable dans des conditions industrielles courantes et présentant des ponts de matière polymérique correctement formés entre les câblés adjacents. Le coefficient de calandrabilité est défini comme le rapport entre le diamètre du câblé et la différence entre le pas de pose dans la nappe et le diamètre du câblé. Pour les nappes envisagées, on a également calculé la force à rupture de cette nappe (Rn) exprimée en daN par mm de nappe.

On a également évalué l'endurance en flexion-compression. En effet, pour des câblés destinés notamment à renforcer des structures de pneumatiques, l'endurance ou résistance à la fatigue peut être analysée en soumettant ces câblés à divers tests de laboratoire connus, notamment au test de fatigue connu sous le nom de test « courroie » parfois nommé *Shoe Shine test »* (voir par exemple EP 848 767, US 2 595 069, US 4 902 774, norme ASTM D885-591 révisée 67T), test dans lequel les câblés préalablement encollés, sont incorporés dans un article en caoutchouc que l'on vulcanise. Le principe du test « courroie », tout d'abord, est le suivant : la courroie comprend deux couches d'éléments filaires textiles, la première couche comprenant les câblés dont on souhaite évaluer la performance noyés au pas de 1,25 mm dans deux skims de composition de 0,4 mm chacun et une deuxième couche de rigidification permettant d'éviter l'allongement de la première couche, cette deuxième couche comprenant des éléments filaires textiles relativement rigides et comprenant deux brins en aramide de 167 tex chacun retordus ensemble à une torsion de 315 tours par mètre et noyés au pas de 0,9 mm dans deux skims de composition de 0,3 mm chacun. L'axe de chaque câblé est orienté selon la direction longitudinale de la courroie. On fait ensuite subir à cette courroie les sollicitations suivantes : on entraîne de façon cyclique, à l'aide d'un système bielle-manivelle, la courroie autour d'un galet de diamètre donné, de telle sorte que chaque portion élémentaire de la courroie soit soumise à une tension de 15 daN et subisse des cycles de variation de courbure qui la font passer d'un rayon de courbure infini à un rayon de courbure donné, ici 20 mm, et ceci pendant 190 000 cycles, à une fréquence de 7 Hz. Cette variation de courbure de la courroie fait subir au câblé de la couche intérieure, celle la plus proche du galet, un taux de compression géométrique donné selon le diamètre du galet choisi. A la fin de ces sollicitations, on extrait par décorticage les câblés de la couche intérieure et on mesure la force rupture résiduelle des câblés fatigués. On en déduit la ténacité apparente résiduelle (σ') ainsi que la déchéance exprimée en % de la ténacité apparente perdue au cours du test. Plus la déchéance est élevée, moins bon en endurance est le câblé.

La construction notée « A55/1/3/4 - Z120/Z180/S300 » du câblé E1 signifie que ce câblé est un câblé à triple torsion (T1, T2, T3) qui est issu d'une opération de torsion finale (T3=300 tours.m$^{-1}$, sens S) de 4 brins différents qui ont été chacun préparés préalablement par une opération de torsion intermédiaire (T2=180 tours.m$^{-1}$) en sens inverse ( sens Z) de 3 pré-brins, chacun de ces 3 pré-brins consistant en 1 filé unique constitué de monofilaments élémentaires en polyamide aromatique, ici l'aramide (A) de titre 55 tex qui a été tordu préalablement sur lui-même au cours d'une première opération de torsion T1=120 tours.m$^{-1}$ dans la même direction (sens Z) que pour les pré-brins. Les autres notations des câblés E2 à E4 et 30 permettent d'identifier *mutatis mutandis* les constructions correspondantes à ces câblés.

Il est important de noter que tous les câblés E1 à E4 et 30 se caractérisent par des coefficients de torsion finaux K3 qui sont très proches et qui permettent de s'assurer que les propriétés supérieures du câblés selon l'invention sont dues à la combinaison spécifique du titre de ses filés et des valeurs de N et M et pas à d'autres caractéristiques, comme par exemple les torsions T1, T2 et T3.

A l'exception du câblé 30, aucun des câblés testé n'est à base de filés constitué de monofilaments élémentaires en polyamide aromatique ou en copolyamide aromatique, et présentant un titre allant de 90 à 130 tex, ici allant de 100 à 120 tex et égal à 110 tex. Les câblés E1 à E4 présentent tous des filés présentant des titres soit plus petits (E1, E3 et E4), soit un titre plus élevé (E2). Seul le câblé 30 selon l'invention présente une construction dans laquelle M=2 et N=3 et dans laquelle chaque filé présente un titre allant de 90 à 130 tex.

En effet, le câblé E1 présente une construction dans laquelle M=3 et N=4 ce qui a pour effet d'obtenir la meilleure force à rupture Fr et la meilleure ténacité apparente σ d'entre celles des câblés testés. Néanmoins, la construction M=3 et N=4 a aussi pour effet, d'une part, de rendre ce câblé coûteux à fabriquer car nécessitant de nombreuses modifications aux installations de retordage existantes et, d'autre part, soit d'utiliser un procédé de fabrication relativement long, soit d'utiliser de nombreuses machines de retordage simultanément du fait que ce câblé est à base de 12 filés. En outre, et surtout, la déchéance du câblé E1 est la plus importante des câblés testés.

Le câblé E2 présente une construction dans laquelle N=M=2. Afin d'essayer de compenser un nombre relativement faible de filés, le câblé E2 comprend des filés présentant un titre égal à 167 tex. La construction N=M=2 du câblé E2 permet, d'une part, sa fabrication sur les installations de retordage existantes sans modifications de celles-ci, et d'autre part, un procédé à la fois relativement rapide et nécessitant un nombre très réduit de machines en raison du nombre réduit de filés à base du câblé (4 pour le câblé E2 contre 12 pour le câblé E1 et 9 pour le câblé E4). Néanmoins, l'utilisation d'un titre relativement élevé conduit, d'une part, à une ténacité apparente σ la plus faible des câblés testés et, d'autre part, à un diamètre relativement élevé et donc à une force à rupture de nappe Rn relativement faible. En outre, la déchéance du câblé E2 est relativement élevée.

Le câblé E3 présente une construction dans laquelle M=2 et N=3 de sorte qu'il est possible de réduire le titre de chaque filé par rapport au câblé E2. La construction M=2 et N=3 du câblé E3 permet, d'une part, sa fabrication sur les installations de retordage existantes sans modifications de celles-ci, et d'autre part, un procédé à la fois relativement rapide et nécessitant un nombre réduit de machines en raison du nombre réduit de filés à base du câblé (6 pour le câblé E3 contre 12 pour le câblé E1 et 9 pour le câblé E4). Ainsi, le câblé E3 présente un diamètre relativement faible mais au prix d'une ténacité apparente σ plus faible que le câblé E1 et d'une résistance de nappe Rn comparable à celle du câblé E2, c'est-à-dire relativement faible. En outre, la déchéance du câblé E3 est relativement élevée.

Contrairement au câblé E1, la construction du câblé E4 est telle que M=N=3 permettant sa fabrication sur les installations de retordage existantes sans modifications de celles-ci. Contrairement au câblé E2, le diamètre du câblé E4 est plus petit que celui du câblé E1. En tant que conséquence du diamètre réduit, contrairement aux câblés E2 et E3, le câblé E4 présente une ténacité apparente équivalente à celle du câblé E1. De plus, contrairement aux câblés E2 et E3, la force à rupture de nappe Rn est maintenue à un niveau satisfaisant par rapport au câblé E1. Enfin, et surtout, le câblé E4 présente une endurance largement supérieure à celles des câblés E1, E2 et E3. Néanmoins, la construction M=N=3 a aussi pour effet de devoir soit utiliser un procédé de fabrication relativement long, soit utiliser de nombreuses machines de retordage simultanément du fait que ce câblé est à base de 9 filés.

Enfin le câblé 30 selon l'invention présente le meilleur compromis entre diamètre maitrisé, endurance améliorée et très grande facilité de fabrication. En effet, contrairement aux câblés E1 et E4, la construction du câblé 30 selon l'invention est telle que M=2 et N=3 et permet, d'une part, sa fabrication sur les installations de retordage existantes sans modifications de celles-ci, et d'autre part, un procédé à la fois relativement rapide et nécessitant un nombre très réduit de machines en raison du nombre réduit de filés à base du câblé (6 pour le câblé 30 selon l'invention contre 12 pour le câblé E1 et 9 pour le câblé E4). Contrairement au câblé E2, le diamètre du câblé 30 selon l'invention est équivalent à celui du câblé E1. Un tel diamètre permet ainsi d'éviter d'augmenter l'épaisseur de nappe, la masse de celle-ci, l'hystérèse du pneumatique et donc la résistance au roulement du pneumatique. De plus, contrairement aux câblés E2 et E3, la force à rupture de nappe Rn est maintenue à un niveau satisfaisant par rapport au câblé E1. Enfin, et surtout, le câblé 30 présente une endurance largement supérieure à celles des câblés E1, E2 et E3.

En conclusion, grâce à l'invention, il est désormais possible, pour une même torsion finale donnée, de conserver les propriétés de compacité et d'améliorer l'endurance en flexion-compression des câblés textiles, ainsi que d'optimiser encore l'architecture des pneumatiques que ces câblés sont susceptibles de renforcer sans pour autant avoir, d'une part, à apporter de nombreuses modifications aux installations de fabrication existantes et, d'autre part, en mettant en oeuvre un procédé à la fois rapide et nécessitant un nombre très réduit de machines en raison du nombre réduit de filés à base du câblé.

L'invention ne se limite pas aux modes de réalisation décrits ci-dessus. En effet, on pourra envisager un mode de réalisation dans lequel l'armature de travail comprend deux nappes de travail. Dans ce mode de réalisation, chaque élément filaire de renfort de carcasse fait un angle supérieur ou égal à 80°, de préférence allant de 80° à 90° avec la direction circonférentielle du pneumatique dans le plan médian du pneumatique et dans le plan circonférentiel équatorial du pneumatique. On obtient alors un pneumatique présentant une armature de carcasse radiale à la fois dans les flancs et dans le sommet. Dans ce mode de réalisation, chaque nappe de travail comprend plusieurs éléments filaires de renfort de travail, de préférence métalliques, agencés côte à côte sensiblement parallèlement les uns aux autres. De tels éléments filaires de renfort de travail forment un angle allant de 10° à 40°, de préférence allant de 20° à 30° avec la direction circonférentielle du pneumatique. Avantageusement, les angles formés par les éléments de renfort de travail des deux nappes sont orientés de façon opposée. En d'autres termes, les éléments de renfort de travail des deux nappes sont croisés d'une nappe de travail par rapport à l'autre. Dans ce mode de réalisation, comme dans celui décrit plus en détails ci-avant, le ou les éléments filaires de renfort de frettage, les éléments filaires de renfort de travail et les éléments filaires de renfort de carcasse sont avantageusement agencés de façon à définir, en projection sur le plan circonférentiel équatorial, un maillage triangulaire.

**Tableau 1**

| Dénomination | E1 | E2 | E3 | E4 | 30 |
|---|---|---|---|---|---|
|  | A55/1/3/4 Z120/Z180/S300 | A167111212 Z120/Z180/S300 | A84111213 Z120/Z180/S300 | A55111313 Z140/Z200/S340 | A110/1/2/3 Z120/Z180/S300 |
| Titre de chaque filé | 55 | 167 | 84 | 55 | 110 |
| M | 3 | 2 | 2 | 3 | 2 |
| N | 4 | 2 | 3 | 3 | 3 |
| T1 (tours.m$^{-1}$) | 120 | 120 | 120 | 140 | 120 |
| T2 (tours.m$^{-1}$) | 180 | 180 | 180 | 200 | 180 |
| T3 (tours.m$^{-1}$) | 300 | 300 | 340 | 340 | 300 |
| K1 | 23 | 41 | 29 | 27 | 33 |
| K2 | 61 | 87 | 61 | 68 | 70 |
| K3 | 203 | 204 | 201 | 199 | 203 |
| Fr (daN) | 116.5 | 88.1 | 73.7 | 87.0 | 99.7 |
| Fr (base 100) | 100 | 76 | 63 | 75 | 86 |
| Diamètre ∅ (mm) | 0.96 | 1.01 | 0.84 | 0.84 | 0.97 |
| σ (daN/mm2) | 161 | 110 | 133 | 157 | 135 |
| σ (base 100) | 100 | 68 | 83 | 98 | 84 |
| Densité (câblés/dm) | 86 | 81 | 99 | 98 | 86 |
| Pas de pose (mm) | 1.16 | 1.22 | 1.01 | 1.01 | 1.17 |
| Coefficient de calandrabilité | 4.8 | 4.8 | 4.9 | 4.9 | 4.9 |
| Rn (daN/mm) | 100.4 | 72.2 | 72.9 | 86.1 | 85.2 |
| σ' (daN/mm2) | 90 | 65 | 82 | 109 | 90 |
| Déchéance (%) | 44 | 41 | 38 | 31 | 33 |

**EP 3 768 882 B1**

**Revendications**

1. Câblé (30) à triple torsion (T1, T2, T3), comportant un assemblage constitué de N=3 brins (20, 20a, 20b, 20c) retordus ensemble selon une torsion T3 et une direction D2, chaque brin étant constitué de M=2 pré-brins (10, 10a, 10b), eux-mêmes tordus ensemble selon une torsion T2 (T2a, T2b, T2c) et une direction D1 opposée à D2, chaque pré-brin consistant lui-même en un filé (5) qui a été tordu préalablement sur lui-même selon une torsion T1 (T1a, T1b) et la direction D1, dans lequel chaque filé (5) est constitué de monofilaments élémentaires en polyamide aromatique ou en copolyamide aromatique, chaque filé (5) présentant un titre allant de 90 à 130 tex.

2. Câblé (30) selon la revendication précédente, dans lequel chaque filé (5) présente un titre allant de 100 à 120 tex, de préférence chaque filé (5) présente un titre égal à 110 tex.

3. Câblé (30) selon l'une quelconque des revendications précédentes, dans lequel chaque pré-brin présente un coefficient de torsion K1 allant de 2 à 80, de préférence de 6 à 70 et plus préférentiellement de 30 à 40.

4. Câblé (30) selon l'une quelconque des revendications précédentes, dans lequel chaque brin présente un coefficient de torsion K2 allant de 10 à 150, de préférence de 20 à 130 et plus préférentiellement de 69 à 86.

5. Câblé (30) selon l'une quelconque des revendications précédentes, présentant un coefficient de torsion K3 allant de 50 à 500, de préférence de 80 à 230.

6. Câblé (30) selon l'une quelconque des revendications précédentes, dans lequel T2 est supérieure à T1.

7. Câblé (30) selon l'une quelconque des revendications précédentes, dans lequel T3 est supérieure à T2.

8. Câblé (30) selon l'une quelconque des revendications précédentes, dans lequel la somme T1 +T2 va de 0,8 fois T3 à 1,2 fois T3, de préférence de 0,9 fois T3 à 1,1 fois T3 et plus préférentiellement la somme T1 +T2 est égale à T3.

9. Câblé (30) selon l'une quelconque des revendications précédentes, présentant une ténacité apparente supérieure ou égale à 115 daN.mm$^{-2}$, de préférence supérieure ou égale à 130 daN.mm$^{-2}$.

10. Câblé (30) selon l'une quelconque des revendications précédentes, présentant un diamètre inférieur ou égal à 1,03 mm, de préférence inférieur ou égal à 1,00 mm et plus préférentiellement inférieur ou égal à 0,98 mm.

11. Article ou produit semi-fini comprenant une matrice polymérique dans laquelle est noyé au moins un câblé (30) selon l'une quelconque des revendications 1 à 10.

12. Pneumatique (100) comprenant un câblé (30) selon l'une quelconque des revendications 1 à 10.

13. Pneumatique (100) comprenant une armature de sommet (140) comprenant une armature de frettage (170) comprenant une nappe de frettage (190) comprenant au moins un élément filaire textile de renfort de frettage (480) faisant un angle strictement inférieur à 10° avec la direction circonférentielle (Z) du pneumatique (10), le ou chaque élément filaire textile de renfort de frettage (480) étant formé par un câblé (30) selon l'une quelconque des revendications 1 à 10.

14. Pneumatique (100) selon la revendication 12 ou 13, comprenant un sommet (120) comprenant une bande de roulement (200), deux flancs (220), deux bourrelets (240), chaque flanc (220) reliant chaque bourrelet (240) au sommet (120), l'armature de sommet (140) s'étendant dans le sommet (120) selon une direction circonférentielle (Z) du pneumatique (100).

15. Pneumatique (10) selon la revendication précédente, comprenant une armature de carcasse (320) ancrée dans chacun des bourrelets (240) et s'étendant dans les flancs (220) et dans le sommet (120), l'armature de sommet (140) étant radialement intercalée entre l'armature de carcasse (320) et la bande de roulement (200).

**Patentansprüche**

1. Cord (30) mit dreifacher Verdrillung (T1, T2, T3), aufweisend einen Aufbau, der aus N=3 Strängen (20, 20a, 20b,

**14**

20c) gebildet ist, die gemäß einer Verdrillung T3 und einer Richtung D2 zusammen verzwirnt sind, wobei jeder Strang von M=2 Vorsträngen (10, 10a, 10b) gebildet ist, die ihrerseits gemäß einer Verdrillung T2 (T2a, T2b, T2c) und einer Richtung D1, die der Richtung D2 entgegengesetzt ist, miteinander verdrillt sind, wobei jeder Vorstrang seinerseits aus einem Garn (5) besteht, das zuvor gemäß einer Verdrillung T1 (T1a, T1b) und der Richtung D1 um sich selbst verdrillt wurde, wobei jedes Garn (5) aus elementaren Monofilamenten aus aromatischem Polyamid oder aus aromatischem Copolyamid gebildet ist, wobei jedes Garn (5) einen Titer von 90 bis 130 tex aufweist.

2. Cord (30) nach dem vorhergehenden Anspruch, wobei jedes Garn (5) einen Titer von 100 bis 120 tex aufweist, vorzugsweise jedes Garn (5) einen Titer gleich 110 tex aufweist.

3. Cord (30) nach einem der vorhergehenden Ansprüche, wobei jeder Vorstrang einen Torsionskoeffizienten K1 von 2 bis 80, vorzugsweise von 6 bis 70 und besser noch von 30 bis 40 aufweist.

4. Cord (30) nach einem der vorhergehenden Ansprüche, wobei jeder Strang einen Torsionskoeffizienten K2 von 10 bis 150, vorzugsweise von 20 bis 130 und besser noch von 69 bis 86 aufweist.

5. Cord (30) nach einem der vorhergehenden Ansprüche, aufweisend einen Torsionskoeffizienten K3 von 50 bis 500, vorzugsweise von 80 bis 230.

6. Cord (30) nach einem der vorhergehenden Ansprüche, wobei T2 größer als T1 ist.

7. Cord (30) nach einem der vorhergehenden Ansprüche, wobei T3 größer als T2 ist.

8. Cord (30) nach einem der vorhergehenden Ansprüche, wobei die Summe T1+T2 von 0,8 mal T3 bis 1,2 mal T3, vorzugsweise von 0,9 mal T3 bis 1,1 mal T3 beträgt und besser noch die Summe T1+T2 gleich T3 ist.

9. Cord (30) nach einem der vorhergehenden Ansprüche, aufweisend eine scheinbare Zähigkeit größer als oder gleich 115 daN.mm$^{-2}$, vorzugsweise größer als 130 daN.mm$^{-2}$.

10. Cord (30) nach einem der vorhergehenden Ansprüche, aufweisend einen Durchmesser kleiner als oder gleich 1,03 mm, vorzugsweise kleiner als oder gleich 1,00 mm und besser noch kleiner als oder gleich 0,98 mm.

11. Artikel oder Halbfabrikat umfassend eine Polymermatrix, in welche wenigstens ein Cord (30) nach einem der Ansprüche 1 bis 10 eingebettet ist.

12. Reifen (100) umfassend einen Cord (30) nach einem der Ansprüche 1 bis 10.

13. Reifen (100) umfassend eine Scheitelbewehrung (140), die eine Umreifungsbewehrung (170) umfasst, die eine Umreifungslage (190) umfasst, die wenigstens ein fadenartiges textiles Umreifungsverstärkungselement (480) umfasst, das einen Winkel streng kleiner als 10° zur Umfangsrichtung (Z) des Reifens (10) bildet, wobei das fadenartige textile Umreifungsverstärkungselement (480) von einem Cord (30) nach einem der Ansprüche 1 bis 10 gebildet ist.

14. Reifen (100) nach Anspruch 12 oder 13, umfassend einen Scheitel (120), der einen Laufstreifen (200) umfasst, zwei Flanken (220), zwei Wülste (240), wobei jede Flanke (220) jeden Wulst (240) mit dem Scheitel (120) verbindet, wobei sich die Scheitelbewehrung (140) im Scheitel (120) in einer Umfangsrichtung (Z) des Reifens (100) erstreckt.

15. Reifen (10) nach dem vorhergehenden Anspruch, umfassend eine Karkassenbewehrung (320), die in jedem der Wülste (240) verankert ist und sich in den Flanken (220) und im Scheitel (120) erstreckt, wobei die Scheitelbewehrung (140) radial zwischen der Karkassenbewehrung (320) und dem Laufstreifen (200) angeordnet ist.

**Claims**

1. Cord (30) with a triple twist (T1, T2, T3), comprising an assembly consisting of N=3 strands (20, 20a, 20b, 20c) twisted together with a twist T3 in a direction D2, each strand consisting of M=2 pre-strands (10, 10a, 10b), which are themselves twisted together with a twist T2 (T2a, T2b, T2c) in a direction D1 opposite to D2, each pre-strand itself consisting in a yarn (5) that has been previously twisted about itself with a twist T1 (T1a, T1b) in the direction D1, wherein each yarn (5) consists of elementary monofilaments of aromatic polyamide or aromatic copolyimide, each yarn (5) having a count ranging from 90 to 130 tex.

2.  Cord (30) according to the preceding claim, wherein each yarn (5) has a count ranging from 100 to 120 tex, preferably each yarn (5) has a count equal to 110 tex.

3.  Cord (30) according to either of the preceding claims, wherein each pre-strand has a twist factor K1 ranging from 2 to 80, preferably from 6 to 70, and more preferably from 30 to 40.

4.  Cord (30) according to any of the preceding claims, wherein each strand has a twist factor K2 ranging from 10 to 150, preferably from 20 to 130, and more preferably from 69 to 86.

5.  Cord (30) according to any of the preceding claims, having a twist factor K3 ranging from 50 to 500, or preferably from 80 to 230.

6.  Cord (30) according to any of the preceding claims, wherein T2 is greater than T1.

7.  Cord (30) according to any of the preceding claims, wherein T3 is greater than T2.

8.  Cord (30) according to any of the preceding claims, wherein the sum T1+T2 ranges from 0.8 times T3 to 1.2 times T3, preferably from 0.9 times T3 to 1.1 times T3, and more preferably the sum T1+T2 is equal to T3.

9.  Cord (30) according to any of the preceding claims, having an apparent toughness greater than or equal to 115 daN.mm$^{-2}$, or preferably greater than or equal to 130 daN.mm$^{-2}$.

10. Cord (30) according to any of the preceding claims, having a diameter less than or equal to 1.03 mm, preferably less than or equal to 1.00 mm, and more preferably less than or equal to 0.98 mm.

11. Semi-finished article or product comprising a polymer matrix in which at least one cord (30) according to any of Claims 1 to 10 is embedded.

12. Tyre (100) comprising a cord (30) according to any of Claims 1 to 10.

13. Tyre (100) comprising a crown reinforcement (140) comprising a hoop reinforcement (170) comprising a hooping ply (190) comprising at least one hoop reinforcement textile filamentary element (480) forming an angle that is strictly less than 10° with the circumferential direction (Z) of the tyre (10), the or each hoop reinforcement textile filamentary element (480) being formed by a cord (30) according to any of Claims 1 to 10.

14. Tyre (100) according to Claim 12 or 13, comprising a crown (120) comprising a tread (200), two sidewalls (220), and two beads (240), each sidewall (220) connecting each bead (240) to the crown (120), the crown reinforcement (140) extending in the crown (120) in a circumferential direction (Z) of the tyre (100).

15. Tyre (10) according to the preceding claim, comprising a carcass reinforcement (320) anchored in each of the beads (240) and extending in the sidewalls (220) and in the crown (120), the crown reinforcement (140) being radially interposed between the carcass reinforcement (320) and the tread (200).

## Fig. 1

## Fig. 2

# Fig. 3

**Fig. 4**

**Fig. 5**

**Fig. 6**

20

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 021485 A
- EP 220642 A
- EP 225391 A
- EP 335588 A
- EP 467585 A
- US 3419060 A
- US 3977172 A
- US 4155394 A
- US 5558 A
- US 144 A
- WO 9706294 A

- EP 848767 A
- WO 2012104279 A
- WO 2012146612 A
- WO 2016091811 A1
- WO 2014057082 A
- WO 2016091809 A
- EP 1623819 A
- FR 1413102
- US 2595069 A
- US 4902774 A